**Europäisches Patentamt**

**European Patent Office**

**Office européen des brevets**

(19)

(11) Numéro de publication: **0 030 221**
**A1**

(12) # DEMANDE DE BREVET EUROPEEN

(21) Numéro de dépôt: **80870042.1**

(22) Date de dépôt: **29.09.80**

(51) Int. Cl.³: **G 01 C 5/04**

(30) Priorité: 30.11.79 BE 198380
27.03.80 BE 199989

(43) Date de publication de la demande:
**10.06.81 Bulletin 81/23**

(84) Etats Contractants Désignés:
**AT CH DE FR GB IT LI LU NL SE**

(71) Demandeur: **AMPLIKART S.P.R.L.**
**53, rue de Naples**
**1050 Bruxelles(BE)**

(72) Inventeur: **From, Joseph**
**31, rue du Champs de Mars**
**B-1050 Bruxelles(BE)**

(74) Mandataire: **Van Malderen, Michel et al,**
**p.a. Freylinger & Associes 22 avenue J.S. Bach (bte 43)**
**B-1080 Bruxelles(BE)**

(54) **Niveau d'eau perfectionné pouvant être muni d'accessoires.**

(57) Niveau d'eau constitué par un vase de compensation (1) et un tube souple (2) relié à une extrémité (21) au vase de compensation (1) et dont au moins l'extrémité opposée (23) libre ouverte à l'atmosphère est transparente.

Le vase de compensation (1) présente une section droite au moins double de celle du tube (2) et le tube comporte un moyen de repérage (3,4) d'un niveau de référence.

Le dispositif permet à un seul opérateur d'effectuer des mesures de niveau avec une grande précision.

Fig.1.

**EP 0 030 221 A1**

Niveau d'eau perfectionné pouvant être muni d'accessoires

La présente invention concerne un niveau d'eau perfectionné pouvant être muni d'accessoires, permettant d'obtenir des mesures précises et pouvant être manipulé par un seul opérateur.

On utilise couramment dans le bâtiment un tuyau transparent en matière plastique souple dans lequel on met de l'eau, en veillant à éviter la présence de bulles d'air.

Conformément au principe des vases communicants, l'eau après stabilisation des mouvements, est au même niveau aux deux extrémités du tube. Un opérateur tenant une première extrémité du tuyau amène le niveau de l'eau en conformité avec le niveau de référence (niveau zéro) et le second opérateur devrait pouvoir déplacer la deuxième extrémité en étant assuré que le niveau indiqué à cette deuxième extrémité corresponde au niveau de référence, ce qui n'est pas le cas par suite des déformations du tuyau.

Ce dispositif présente une série d'inconvénients parmi lesquels on peut citer: la difficulté à remplir sans bulles le tuyau, la nécessité de disposer de deux opérateurs, l'impossibilité de calibrer l'instrument pour mesurer des valeurs précises au-dessus ou en-dessous du niveau de référence, l'obligation d'utiliser un tuyau de diamètre relativement important pour éviter les erreurs de mesure, ce qui augmente le poids du dispositif, les débordements du liquide à l'une ou l'autre extrémité en cas de fausse manoeuvre, la sensibilité aux contraintes de déformation du tube entraînant des erreurs, le ternissement de la transparence du tuyau au cours du temps, etc..

La présente invention vise en conséquence à perfectionner le niveau d'eau du type décrit.

Selon l'invention, on fournit un niveau d'eau constitué par un vase de compensation et un tube souple relié à une extrémité au vase de compensation et dont au moins l'extrémité opposée libre ouverte à l'atmosphère est transparente, caractérisé en ce que le vase de compensation présente une section droite au moins double de celle du tube et que le tube comporte un moyen de repérage d'un niveau de référence.

En pratique, on réalise un vase de compensation d'une contenance au moins égale au volume intérieur total du tube souple et on fixe l'extrémité libre du tube sur un support muni d'un index mobile par rapport à ce support et en même temps au tube.

Pour rendre le niveau mieux visible, il est avantageux d'utiliser un liquide coloré dans le tube.

Le liquide utilisé, en plus d'être coloré, peut comporter un agent mouillant qui apporte une série d'avantages qui seront décrits ci-dessous.

On ajoutera avantageusement un fongicide ou un antiseptique qui évite le développement d'algues et d'autres micro-organismes qui risquent de ternir le tube à son extrémité de lecture, de freiner le déplacement du liquide et même de boucher le tube. L'addition complémentaire d'un anti-gel tel que le glycol peut être également recommandable lorsque le dispositif est utilisé ou stocké à de basses températures.

Afin de ne pas devoir vider le tube après chaque utilisation, on munit avantageusement l'extrémité du tube opposée à celle reliée au vase de compensation d'un moyen d'obturation (24) tel qu'un bouchon ou une valve.

Il peut être également intéressant de munir l'extrémité de lecture du tube d'une lentille permettant de réperer avec précision le niveau ou de lire à distance la position du repère mobile.

L'invention sera décrite plus en détail et des caractéristiques complémentaires de celle-ci apparaîtront à la lecture de la description qui suit destinée à illustrer l'invention, en référence aux dessins annexés.

Ceux-ci représentent :

Figure 1, une vue schématique d'un dispositif selon l'invention,

Figure 2 à 5, des vues schématiques d'accessoires détecteurs de niveau et,

Figure 6, un dispositif de lecture à aiguille d'un détecteur électrique ou électronique de niveau.

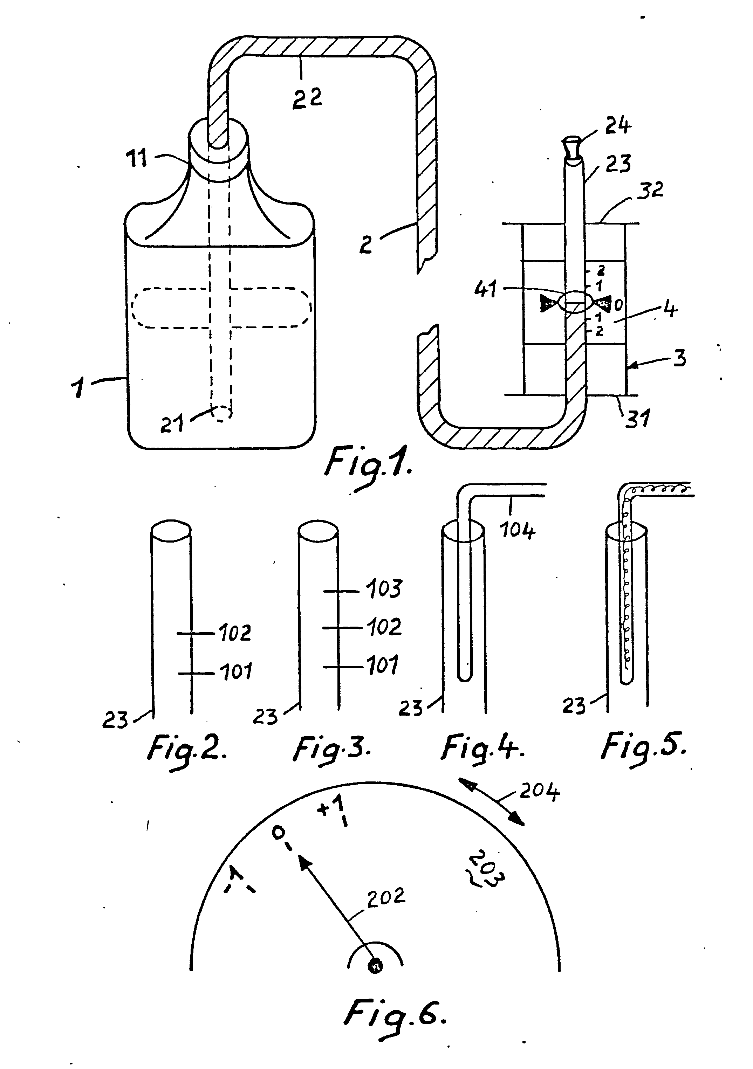

Dans la figure 1, on a représenté une vue schématique d'un dispositif selon l'invention, comportant un vase de compensation sous forme d'un flacon 1 et un tube 2 (représenté seulement partiellement) ainsi qu'un support 3 avec index mobile 4 qui coulisse sur le support 3. Le tube qui n'est représenté que partiellement sur la figure 1 peut être de longueur quelconque et est fixé sur le support 3.

Le flacon 1 est en un matériau souple et comporte un bouchon à visser 11 dans lequel coulisse de façon étanche une extrémité 21 du tube 2 qui arrive pratiquement jusqu'au fond du flacon ainsi que représenté.

Selon une autre forme d'exécution de l'invention, on pourrait prévoir un flacon comportant une ouverture à sa partie supérieure et une tubulure à sa partie inférieure à laquelle est relié le tube. Cette forme d'exécution présente cependant un inconvénient que le liquide contenu dans le flacon peut être facilement renversé.

Dans la forme d'exécution représentée à la figure 1, en vue d'amorcer le siphon 22 que forme la partie coudée supérieure du tube, il suffit de visser le bouchon 11 sur le flacon 1, en le rendant étanche, et de presser le flacon 1 pour forcer le liquide à monter dans le tube 2 en surpassant le siphon 22. On dévisse ensuite le bouchon 11 afin de rétablir la pression atmosphérique dans le flacon 1. On laisse alors le liquide remplir complètement le tube 2 afin que le liquide parvienne pratiquement jusqu'à l'extrémité 23 de clui-ci.

Après établissement de l'équilibre, il s'établit un équilibre de niveau similaire à celui représenté dans la figure 1. Toutes les mesures de mise à zéro et des mesures ultérieures se feront ensuite par un seul opérateur en se référant uniquement à l'extrémité 23 du tube 2, à savoir l'extrémité de mesure qui est fixée sur un support adéquat 3. La mise à zéro de départ s'effectue par exemple en plaçant la base 31 du support 3 ou la partie plane supérieure 32 de ce support en contact avec le niveau de référence (niveau zéro). Dès ce moment le flacon 1 doit bien sûr être maintenu à son emplacement initial et ne peut plus être déplacé. Afin d'assurer un positionnement stable du flacon, celui-ci comportera au moins une base plane et de préférence sera monté lui-même sur un dispositif permettant aussi bien de déposer le flacon sur une surface plane 31, soit la surface 32 ont été amenées en contact avec une surface de référence, on déplace l'index mobile 4 exactement en face du niveau d'équilibre du liquide contenu dans le tube 2.

Un opérateur unique peut ensuite déplacer librement le support 3 et repérer des niveaux identiques au niveau de référence, en fonction du type de mesure de repérage initial, en plaçant de la même façon soit la base 31, soit la partie plane supérieure 32, en concordance avec un plan pour lequel le niveau de lecture du liquide à l'intérieur du tube correspond à l'index zéro.

Dans la mesure où l'index mobile 4 est étalonné on peut également relever des niveaux situés par exemple à + 1, + 2 etc.. ou - 1, - 2, etc.. cm par rapport au niveau zéro. Dans la figure 1, on a indiqué de telles graduations qui sont reportées sur le repère mobile 4 au-dessus et en-dessous du niveau zéro.

Il convient de noter qu'un seul opérateur peut procéder à toutes les opérations sans référence d'ailleurs au niveau du liquide dans le flacon 1, celui-ci pouvant même être opaque, toutes les mesures étant effectuées à l'extrémité libre 23 du tube solidaire du support 3.

Pour que la mesure puisse être faite par un seul homme, il faut cependant que les mouvements de la matière du tube influence le moins possible les déplacements du liquide. Pour diminuer les mouvements du liquide, il est prévu selon l'invention que la section droite du vase de compensation (flacon 1 ) soit au moins double de celle du tube. Grâce à cette mesure, on peut utiliser un diamètre du tube très faible (par exemple un diamètre inférieur de 4mm) et en utilisant un faible diamètre du tube 2, on peut réduire la quantité de liquide dans le tube et par conséquent également le poids du dispositif.

De plus, il devient également possible d'utiliser dans ce cas un rapport épaisseur de paroi du tube au diamètre du tube qui soit élevé, ce qui réduit les déformations.

Le rapport de la section droite du flacon 1 qui est au moins le double de celle de la section droite du tube 2 permet de compenser les mouvements du liquide dans le tube car la masse de liquide mise en mouvement pour une amplitude même importante du déplacement de liquide dans le tube n'entraîne que des variations très faibles du niveau de liquide dans le flacon agissant commme vase de compensation. Plus le rapport entre la section droite du flacon 1 et la section droite du tube 1 sera élevée, meilleur sera l'effet de compensation et par conséquent meilleures seront les mesures.

De plus, en utilisant le liquide d'un tube fin comme indicateur de niveau, les lectures de niveau sont plus précises à condition d'avoir bien entendu une surface plane de liquide. Ceci est obtenu par l'utilisation d'un agent mouillant (agent tensio-actif) qui évite la formation d'un ménisque, qui réduit la tendance à la formation de bulles d'air et rend plus facile le déplacement du liquide dans le tube en réduisant donc le temps nécessaire à l'établissement de l'état d'équilibre.

Ainsi qu'on l'a indiqué précédemment, le tube contiendra un liquide tel que l'eau ou l'alcool dans lequel a été ajouté un colorant, un agent mouillant, un antiseptique et éventuellement un anti-gel.

Ces produits peuvent être préparés sous une forme concentrée à diluer dans l'eau. La préparation concentrée peut être fournie dans une ampoule, une bouteille ou un berlingot en plastique.

L'extrémité libre 23 du tube peut être munie d'un obturateur (bouchon ou valve) pour ne pas être obligé de vider le tube après chaque utilisation.

Généralement, il est utile de prévoir que le volume total intérieur du tube 2, soit inférieur au volume disponible dans le flacon 1, ce qui permet, après chaque usage si on le souhaite, de recueillir dans le falcon 1 la totalité du liquide utilisé.

L'index mobile 4 peut être équipé d'une lentille 41 à hauteur du repère zéro, qui se déplace avec le repère mobile 4 pour faciliter la lecture du niveau, en particulier lorsqu'on utilise des tubes de très fin diamètre.

La lecture du niveau peut être rendue automatique, sur une forme d'exécution de l'invention à l'aide de dispositifs électriques ou électroniques.

Il suffit d'implanter dans le liquide du tuyau un contact de masse (au travers du plastique du tube ou si nécessaire dans le flacon). Un autre contact est implanté à travers du tube (par exemple à une aiguille à travers celle-ci). Quand le liquide touche ce contact, le courant passe et active un circuit électronique qui peut allumer par exemple une lampe ou provoquer un signal sonore.

Plusieurs contacts de lecture implantés à différentes hauteurs peuvent allumer diverses lampes ou des dispositifs d'affichage numérique indiquant divers niveaux étalonnés.

En conservant un contact de masse et en introduisant une tige dans le tuyau, on obtient une résistance variable en fonction du niveau de liquide dans le tube.

La mesure obtenue dans ce cas peut servir de repère de niveau en utilisant un appareil mesurant la résistance, chaque valeur de résistance correspondant à un niveau particulier qui peut être facilement étalonné.

Un comparateur électronique peut être également influencé par une résistance variable (potentiomètre) de façon à allumer une lampe qui indiquera le niveau exact. L'augmentation de la résistance peut allumer une lampe qui indique que le liquide est trop bas, tandis qu'une diminution de la résistance peut allumer une autre lampe qui indiquera que le liquide est trop haut.

Le mode de fonctionnement du dispositif selon les principes ci-dessus est illustré aux figures 2 à 6.

Dans la figure 2, l'extrémité libre du tube 23 est équipée des contacts 101 et 102. Le contact 101 est relié à la masse et le contact 102 est un contact d'information tel que, lorsque le liquide arrive à ce niveau, il ferme un circuit extérieur (non représenté) et alimente par exemple une lampe ou un signal sonore.

Un système identique à celui de la figure 2 mais comportant un contact supplémentaire 103 qui indique le dépassement d'un niveau pouvant entraîner un débordement hors du tube (ce qui causerait une lecture ultérieure fausse) a été prévu.

Une autre forme de réalisation est représentée à la figure 4. Dans celle-ci, une tige 104 plonge dans l'extrémité 23 du tube. La résistance électrique de la tige 104 est mesurée en permanence. Plus i y aura de liquide le long de la tige 104, plus la résistance mesurée diminuera; la mesure de la résistance permet donc de mesurer un niveau déterminé correspondant à une référence initiale mais également de mesurer des valeurs numériques converties en cm par exemple en-deçà et au-delà de cette valeur de référence qui correspond au niveau zéro.

Dans la forme d'exécution de la figure 5, on trouve un contact de masse et un contact de mesure isolés l'un de l'autre mais montés sur une même tige.

Dans la figure 6, on a représenté une aiguille 202 qui indique une résistance déterminée tandis qu'un disque 203 sert de repère et peut tourner dans le sens des flèches portant le repère 204 pour s'ajuster sur l'aiguille.

Bien qu'on ait représenté des formes d'exécution préférées de l'invention, il doit être bien entendu que de nombreuses variantes sont possibles tout en restant dans le cadre de l'invention.

C'est ainsi par exemple que le moyen de repérage d'un niveau de référence peut être constitué simplement par un morceau de tube plus large coulissant sur l'extrémité 23 du tube 2.

Il est également possible de prévoir des moyens d'accrochage rapide permettant de bloquer le tube 2 au moyen de clous et/ou d'un auto-collant ou d'un coin d'accrochage.

Dans certains cas particuliers, il peut être intéressant que le liquide remplissant le tube 2 ou les repères et supports de repère soient fluorescents, phosphorescents ou réfléchissants pour faciliter l'observation.

REVENDICATIONS

1. Niveau d'eau constitué par un vase de compensation (1) et d'un tube souple (2) relié à une extrémité (21) au vase de compensation (1) et dont au moins une extrémité opposée (23) libre ouverte à l'atmosphère et transparente, caractérisé en ce que le vase de compensation (1) présente une section droite au moins double de celle du tube (2) et que le tube comporte un moyen de repérage (3,4) d'un niveau de référence.

2. Niveau d'eau selon la revendication 1 caractérisé en ce que le vase de compensation (1) est d'une contenance au moins égale au volume total inférieur du tube souple (2).

3. Niveau d'eau selon la revendication 1 ou 2 caractérisé en ce que l'extrémité libre (23) du tube (2) est fixé sur un support (3) muni d'un index mobile (4) par rapport à ce support (3).

4. Niveau d'eau selon l'une quelconque des revendications 1 à 3 caractérisé en ce qu'un liquide coloré est contenu dans le tube (2).

5. Niveau d'eau selon l'une quelconque des revendications 1 à 4 caractérisé en ce qu'un liquide comportant un agent mouillant est contenu dans le tube (2).

6. Niveau d'eau selon l'une quelconque des revendications 1 à 5 caractérisé en ce qu'un liquide comportant un agent qui évite le développement d'algues ou d'autres micro-organismes est contenue dans le tube (2).

7. Niveau d'eau selon l'une quelconque des revendications 1 à 6 caractérisé en ce qu'un liquide comportant un antigel est contenu dans le tube (2).

8. Niveau d'eau selon l'une quelconque des revendications 1 à 7 caractérisé en ce que l'extrémité (23) du tube (2) opposée à celle reliée au vase de compensation (1) est muni d'un moyen d'obturation.

9. Niveau d'eau selon l'une quelconque des revendications 1 à 8 caractérisé en ce que l'extrémité (23) de lecture du tube (2) est muni d'une lentille (41) permettant de repérer avec précision le niveau ou de lire à distance la position du repère mobile (4).

10. Niveau d'eau selon l'une quelconque des revendications 1 à 9 caractérisé en ce que le diamètre du tube (2) utilisé est inférieur à 4 mm.

Fig.1.

Fig.2.    Fig.3.    Fig.4.    Fig.5.

Fig.6.

| Office européen des brevets | **RAPPORT DE RECHERCHE EUROPEENNE** | Numéro de la demande |
|---|---|---|
| | | EP 80 87 0042 |

| **DOCUMENTS CONSIDERES COMME PERTINENTS** | | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 2 349 818 (J. BIEBER) <br> * Page 7, lignes 1-39 * <br> -- | 1-3,5, 7,8 | G 01 C 5/04 |
| | DE - A - 2 717 347 (E.N. MENDE) <br> * Pages 10-12 * <br> -- | 1-3 | |
| | US - A - 3 651 581 (E. LEHMAN) <br> * En entier * <br> -- | 1-4,8 | |
| | GB - A - 1 470 514 (W.G. JONES) <br> * Page 2, lignes 1-117 * <br> ---- | 1-3 | DOMAINES TECHNIQUES RECHERCHES (Int. Cl.³) <br><br> G 01 C 5/04 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 25-02-1981 | DE BUYZER |

OEB Form 1503.1  06.78